# EUROPEAN PATENT APPLICATION

(11) **EP 1 538 833 A1**
(43) Date of publication of application: **08.06.2005**
(21) Application number: 04725194.7
(22) Date of filing: 01.04.2004
(51) Int. Cl.: H04N 5/76, H04N 5/44

(54) **DATA PROCESSING APPARATUS**

(30) Priority: 08.04.2003 JP 2003103949
(71) Applicant: MATSUSHITA ELECTRIC INDUSTRIAL CO., LTD., Kadoma-shi, Osaka 571-8501 (JP)
(72) Inventor: SAKATANI, Tomohiko, Ashiya-shi, Hyogo 659-0086 (JP)
(74) Representative: Grünecker, Kinkeldey, Stockmair & Schwanhäusser Anwaltssozietät
(86) International application number: PCT/JP2004/004803
(87) International publication number: WO 2004/091200

(57) **Abstract**

A data processor that can record a program on a storage medium is connected to a network, to which a database and at least one server are also connected. The database collects program specific information, which is made up of a number of parameters to designate a particular program. The server searches the program specific information in the database by reference to searching data, thereby extracting at least one of the parameters. The data processor includes: a user interfacing section for receiving searching data on a program to be recorded from the user; a control section for transmitting the searching data to the server and receiving a parameter that has been extracted by the server; and a recording section for recording the received parameter and the program to be recorded on a storage medium so that the parameter and the program are associated with each other.

## Description

### TECHNICAL FIELD

The present invention relates to the technique of acquiring information about a broadcast content to be recorded (such as the title of a program) and also relates to the technique of controlling the execution of scheduled recording of a broadcast content in accordance with the information acquired.

### BACKGROUND ART

In recent years, as digital broadcasting and the Internet have become even more popular, electronic program guides (EPGs) are provided through these media at an increasing number of opportunities and known to more and more people. By using EPGs, the user can easily browse or search a list of programs, select a program for future recording, for example, and entitle a recorded program.

In a conventional analog broadcast, for example, program information is superposed on analog broadcast wave in a gap between vertical blanking intervals (VBIs). When a TV, a VCR or any other appliance receives this program information and makes a database of the list of programs, the user can use the EPG functions.

On the other hand, in a Japanese BS digital broadcast, not only the audiovisual and other data representing the contents of a program but also the information about the program are transmitted as well. In this case, the "program information" includes the title, category and performers of the program and other pieces of information about the contents of the program. When an appliance that can receive a BS digital broadcast compiles a list of programs based on the program information, the user can not only browse and search the list of programs but also select a program for recording by combining that receiver with a recorder.

As still another example, there are some websites on the Internet that allow the users to browse EPGs describing the broadcasting schedule of programs and the program information described above. By using a browser function installed in a personal computer (which will be abbreviated herein as a "PC"), for example, the user can connect to one of those sites, get an EPG displayed on a monitor screen and browse the EPG. Also, by making the PC and a recorder cooperate with each other, the user can also select a program for recording and get the scheduled recording executed. Furthermore, either by combining the PC with an external recorder such as a VTR or by using the PC by itself if the PC has a video recording capability, the user can select a program for recording and record the program.

Japanese Laid-Open Publication No. 10-40603 discloses a system that allows the user to select a program for recording, record the program and view it by using a PC.

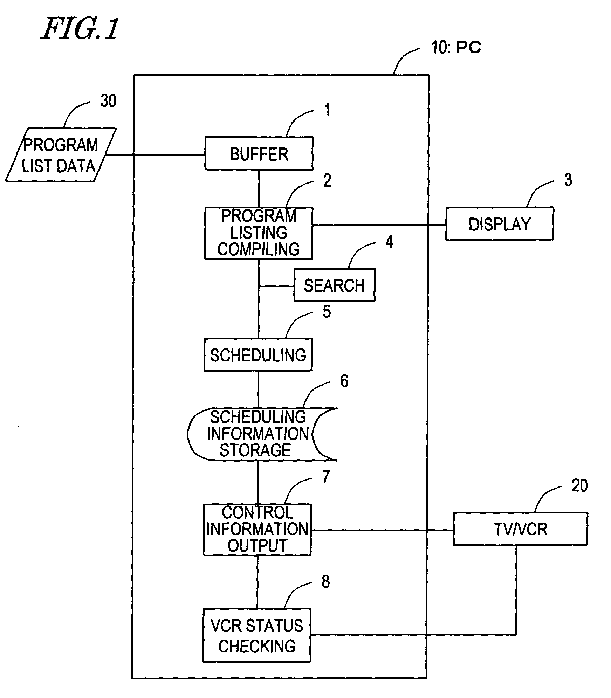

FIG. **1** shows an arrangement of functional blocks for a PC **10** for use in a conventional recording scheduling system. The PC **10** includes a buffer **1**, a program list compiling section **2**, a display section **3**, a search section **4,** a scheduling section **5**, a scheduling information storage section **6**, a control information output section **7** and a VCR status checking section **8**.

These components of the PC **10** have the following functions and operate as follows. Specifically, the buffer **1** retains program list data **30** about the list of broadcast programs. The PC **10** acquires this program list data **30** through a network such as the Internet or from a storage medium such as a CD-ROM. The program list compiling section 2 compiles a list of programs based on the program list data **30** such that the user can browse the list of programs or use it via the search section **4**.

The user can extract various data items including the title, scheduled start time, channel number, category (e.g., news, movie, sports and so on) and performers of the program from the list of programs. The PC **10** presents the list of programs thus compiled as a day-by-day arrangement of programs on the display section **3** such as a display. The user selects his or her desired program to be recorded from the presented arrangement of programs using a mouse (not shown) connected to the PC **10** or any other appropriate input device, thereby determining a broadcast program to select and to videotape.

Instead of directly designating them with a mouse, the user can also search the list of programs with the title, category (e.g., news, movie, drama and so on) or performers of the program, for example. The search section **4** receives an input keyword such as the title or a performer of a program and searches the list of programs with the keyword. As a result of the search, the programs are automatically screened and candidates of programs to select are shown on the display section **3**. Then, the user picks his or her desired progrdm(s) from the candidates on the screen with a mouse, for example.

The scheduling section **5** performs the scheduling processing of the program that has been either designated directly, or selected from among a number of candidates, by the user. The scheduling information storage section **6** stores various pieces of information (e.g., program start and end times and broadcaster's channel number) that should be transmitted to a TV and/or a VCR **20** to activate the TV/VCR **20** and get the selected program recorded.

When it's the scheduled recording start time, the control information output section **7** asks the VCR status checking section **8** whether or not the VCR **20** can perform the target processing (e.g., videotaping). If the answer is YES, then the control information output section **7** transmits control information for turning the TV 20 ON and control information for specifying the channel number to the TV **20.** When the user selects a program for recording, the control information output section **7** transmits control information for turning the VCR **20** ON, control information for specifying the channel number and control information for instructing the VCR **20** to start recording the program. When it's the scheduled recording end time, the control information output section **7** also transmits a control signal for ending the videotaping operation.

In response to the inquiry from the control information output section **7,** the VCR status checking section **8** checks the status of the VCR, i.e., whether the VCR can start recording immediately or is currently engaged in another job and cannot respond. Based on that status, the VCR status checking section **8** outputs a signal, representing whether or not the VCR **20** can perform the target processing, to the VCR **20.** According to this processing method, after having searched, the user chooses his or her desired program from a list of candidate TV programs shown on the display of the PC 10, thereby shortening the time it takes to select and list a program for recording. Also, at the recording start and end times, the PC **10** sends a turn ON signal, a channel specifying signal and recording start/end signals to the VCR **20.** In this manner, the user can also perform recording, playback or any other operation while the VCR is on standby to fulfill the scheduled recording.

However, to use the program information with a conventional appliance, that appliance must have the function of setting up a list of programs. In other words, unless the appliance is equipped with hardware and software that are needed to acquire the program information for setting up a list of programs, actually set up the list of programs, and extract the program information, the user cannot use the program information.

Furthermore, when a recording operation (including a scheduled recording operation) is carried out by making a PC, for example, and a recorder cooperate with each other, only the channel number information, recording start time and other control information can be transmitted from the PC to the recorder under the current state of the art. Thus, the user can identify the recorded programs just by the channel number or recording date, which is not convenient for the user.

Furthermore, in using the program information, the appliance cannot receive necessary up-to-date data at its own request or may receive it even when it does not want it. For example, the program information superposed on an analog broadcast wave is normally updated just five times a day. Accordingly, it is difficult for the appliance to cope with a change of program broadcasting schedule swiftly enough. Meanwhile, the program information superposed on BS digital broadcasting is updated as frequently as once in several minutes. Thus, a heavy processing load is placed on the receiver. That is to say, in order to use the program information fully, the receiver needs to have high processing performance.

This problem never arises in a PC that does not use program information on a broadcast wave. However, if a PC uses the broadcast program information, then another problem will occur. Specifically, it is when the user selects a program for recording that the program list data should be acquired. Accordingly, if the program broadcasting schedule has been changed for some reason on the transmitting end after the user has selected his or her desired program, then that change cannot be coped with. Thus, the actual recording should be carried out in accordance with the program information at the time of program selection and the user may be unable to record his or her desired program.

Thus, an object of the present invention is to provide an apparatus that does not need the function of compiling a list of programs but that can acquire and use program information almost in real time. Another object of the present invention is to provide an apparatus that provides an increased degree of convenience for the user by recording a program by using the program information.

### DISCLOSURE OF INVENTION

A data processor according to the present invention operates by being connected to a network, to which a database and at least one server are also connected. The database is provided to store program specific information, which is made up of a number of parameters to designate a particular program. The at least one server is provided to search the program specific information in the database by reference to searching data, thereby extracting at least one of the parameters. The data processor includes: a user interfacing section for receiving searching data on a program to be recorded from the user; a control section for transmitting the searching data to the server and receiving a parameter that has been extracted by the server; and a recording section for recording the received parameter and the program to be recorded on a storage medium so that the parameter and the program are associated with each other.

The database may store, as the parameters, title information representing the title of a program, broadcaster information identifying the broadcaster of the program, and date/time information showing the date and time of the program. The user interfacing section may get, as the searching data, information on the broadcaster and scheduled broadcasting date and time of the program to be recorded. The control section may receive the title information that has been extracted by the server by reference to the searching data.

The user interfacing section may get date/time information specifying a predetermined period, and the control section may receive the title information of programs to be broadcast during the predetermined period from the broadcaster identified by the broadcaster information.

The recording section may record the title information of the programs and the programs themselves during the predetermined period so that the programs and the title information are associated with each other.

The user interfacing section may get date/time information represented by a specified time, and the control section may receive the title information of a program to be broadcast during a broadcasting period, including the specified time, by the broadcaster identified by the broadcaster information.

The control section may further receive parameters specifying start and end times of the broadcasting period of the program from the server, and the recording section may record the title information of the program and the program itself during the broadcasting period, specified by the parameters, so that the program and the title information are associated with each other.

The database may further store an identifier, which identifies each said program from the other programs, as another parameter making up the program specific information. The control section may receive not only the title information of the program but also the identifier thereof, transmit the identifier to the server before the predetermined period begins so as to receive the date/time information of the program, having the identifier, from the server, and determine whether or not the received date/time information shows the same period of time as the predetermined period. If the date/time information shows the same period of time as the predetermined period, then the recording section may record the title information of the program and the program itself during the predetermined period.

The database may further store an identifier, which identifies each said program from the other programs, as another parameter making up the program specific information. The control section may receive not only the title information of the program but also the identifier thereof, transmit the identifier to the server before the predetermined period begins so as to receive the date/time information of the program, having the identifier, from the server, and determine whether or not the received date/time information shows the same period of time as the predetermined period. Unless the date/time information shows the same period of time as the predetermined period, the predetermined period may be changed in accordance with updated date/time information that has been obtained after the identifier was transmitted.

The database may further store additional information on at least one of the contents, performers and category of the program as another parameter, and the control section may receive the additional information that has been further extracted by the server by reference to the searching data.

A data processing method according to the present invention is used in a data processor connected to a network, to which a database and at least one server are also connected. The database is provided to store program specific information, which is made up of a number of parameters to designate a particular program. The at least one server is provided to search the program specific information in the database by reference to searching data, thereby extracting at least one of the parameters. The data processing method includes the steps of: receiving searching data on a program to be recorded from the user; transmitting the searching data to the server and receiving a parameter that has been extracted by the server; and recording the received parameter and the program to be recorded on a storage medium so that the parameter and the program are associated with each other.

The database may store, as the parameters, title information representing the title of a program, broadcaster information identifying the broadcaster of the program, and date/time information showing the date and time of the program. The step of receiving the searching data may include getting, as the searching data, information on the broadcaster and scheduled broadcasting date and time of the program to be recorded, and the step of receiving the parameter may include receiving the title information that has been extracted by the server by reference to the searching data.

The step of receiving the searching data may include getting date/time information specifying a predetermined period, and the step of receiving the parameter may include receiving the title information of programs to be broadcast during the predetermined period from the broadcaster identified by the broadcaster information.

The step of recording may include recording the title information of the programs and the programs themselves during the predetermined period so that the programs and the title information are associated with each other.

The step of receiving the searching data may include getting date/time information represented by a specified time, and the step of receiving the parameter may include receiving the title information of a program to be broadcast during a broadcasting period, including the specified time, by the broadcaster identified by the broadcaster information.

The step of receiving the parameter may further include receiving parameters specifying start and end times of the broadcasting period of the program from the server, and the step of recording may include recording the title information of the program and the program itself during the broadcasting period, specified by the parameters, so that the program and the title information are associated with each other.

The database may further store an identifier, which identifies each said program from the other programs, as another parameter making up the program specific information. The step of receiving the parameter may include the steps of: receiving not only the title information of the program but also the identifier thereof; transmitting the identifier to the server before the predetermined period begins so as to receive the date/time information of the program, having the identifier, from the server; and determining whether or not the received date/time information shows the same period of time as the predetermined period. If the date/time information shows the same period of time as the predetermined period, then the step of recording may include recording the title information of the program and the program itself during the predetermined period.

The database may further store an identifier, which identifies each said program from the other programs, as another parameter making up the program specific information. The step of receiving the parameter may include the steps of: receiving not only the title information of the program but also the identifier thereof; transmitting the identifier to the server before the predetermined period begins so as to receive the date/time information of the program, having the identifier, from the server; and determining whether or not the received date/time information shows the same period of time as the predetermined period. Unless the date/time information shows the same period of time as the predetermined period, the step of receiving the parameter may further include the step of changing the predetermined period in accordance with updated date/time information that has been obtained after the identifier was transmitted.

The database may further store additional information on at least one of the contents, performers and category of the program as another parameter, and the step of receiving the parameter may include receiving the additional information that has been further extracted by the server by reference to the searching data.

A data processing system according to the present invention includes a server, a database and a data processor, which are all connected to a network. The database is provided to store program specific information, which is made up of a number of parameters to designate a particular program. The server is provided to search the program specific information in the database by reference to searching data, thereby extracting at least one of the parameters. The data processor includes: a user interfacing section for receiving searching data on a program to be recorded from the user; a control section for transmitting the searching data to the server and receiving a parameter that has been extracted by the server; and a recording section for recording the received parameter and the program to be recorded on a storage medium so that the parameter and the program are associated with each other.

### BRIEF DESCRIPTION OF DRAWINGS

FIG. **1** shows an arrangement of functional blocks for a PC **10** for use in a conventional recording scheduling system.
FIG. **2** shows a configuration for a data processing system **90** according to an embodiment of the present invention.
FIG. **3** shows an arrangement of functional blocks mainly for the system control section **300.**
FIG. **4** is a flowchart showing the procedure of selecting and listing a program for recording for an HDD recorder **200.**
FIG. **5(a)** shows an exemplary scheduling/listing window.
FIG. **5(b)** shows an exemplary input area **51** in which various parameters have been input.
FIG. **5(c)** shows a title area **55** in which the title of a program is presented.
FIG. **5(d)** shows an area **58** in which "enter" is highlighted.
FIG. **6** shows the flow of data in a title finding process.
FIGS. **7(a)** through **7(d)** show a second exemplary scheduling/listing window according to the embodiment.
FIG. **8** is a flowchart showing how the HDD recorder 200 performs the scheduling/listing procedure.

### BEST MODE FOR CARRYING OUT THE INVENTION

Hereinafter, preferred embodiments of the present invention will be described with reference to the accompanying drawings.

### EMBODIMENT 1

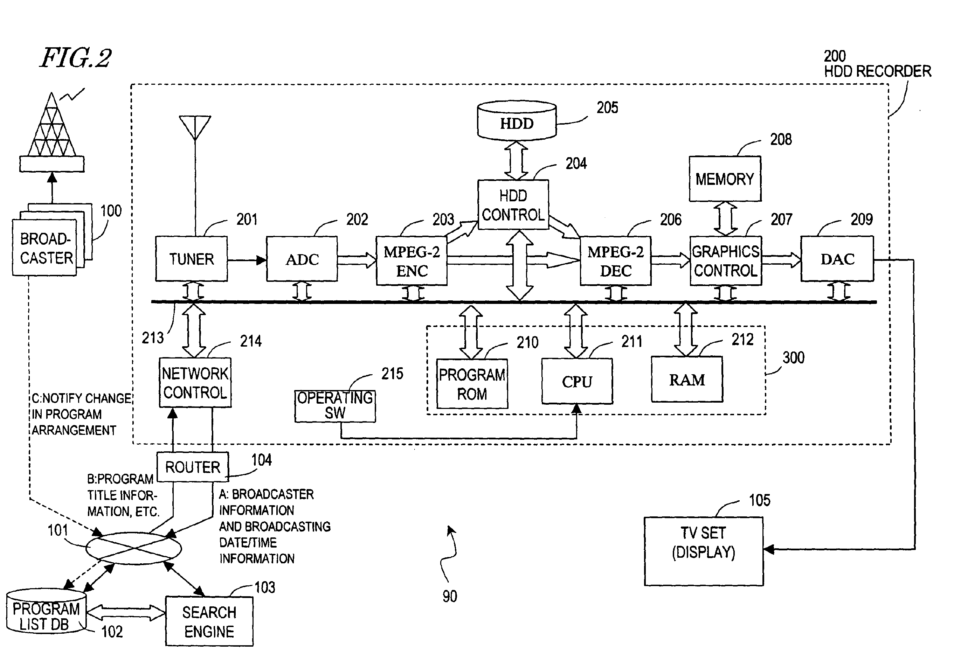

FIG. **2** shows a configuration for a data processing system **90** according to the first embodiment of the present invention. The data processing system **90** includes at least one broadcaster **100,** a network **101,** a program list database **102,** a search engine **103,** a router **104,** a display device **105,** and a hard disk recorder (HDD recorder) **200.**

First, it will be outlined what type of processing the data processing system **90** performs. One of the prime features of the data processing system **90** is that in recording a program, the HDD recorder **200** gets the title and other information of the program without using the conventional EPG and records the program with that information associated with the program.

For example, the user of this HDD recorder **200** can select a program for future recording roughly as follows. First, he or she enters his or her specified searching data (i.e., search criteria such as a channel number and a broadcasting date and time). Then, the HDD recorder **200** transmits the searching data to the search engine **103** through the network **101.** By reference to the searching data received, the search engine **103** searches the program list database **102.** In the program list database **102,** program specific information, identifying programs to be broadcast, has been collected. The program specific information is made up of a number of parameters including the channel number, broadcasting date and time, and title of each program. If a program, having parameters that match the searching data, has been found as a result of the search, then the search engine **103** retrieves the title data of that program, for example, from the program list database **102.** Alternatively or additionally, the search engine **103** may also acquire data about the exact broadcasting start and end times of that program. These data are further transmitted from the search engine **103** to the HDD recorder **200.**

The HDD recorder **200** receives the program title and other data from the search engine **103.** When it's the scheduled broadcasting date and time, the HDD recorder **200** starts recording that program and the received data on a hard disk with the program and the data associated with each other. For example, if the program requested is yet to be broadcast, then the program is selected and listed for recording along with its title. When the broadcasting date and time has arrived, that program will be recorded along with its title. Meanwhile, if the program requested is now being broadcast, then the program starts being recorded immediately along with its title.

Hereinafter, the functions of respective components that makes up the data processing system **90** will be described first. After that, it will be described in detail what type of processing the data processing system **90** performs (and how the HDD recorder **200** works among other things).

First of all, the network **101** may be the Internet and connects together the broadcasters **100,** program list database **102,** search engine **103** and HDD recorder **200** with the router **104** so that communications can be done from any one of these to another.

The broadcaster **100** transmits a broadcasting content (i.e., a program) on analog broadcast wave, for example. In many cases, there are a number of broadcasters **100.** Also, the broadcaster **100** outputs information about the arrangement of its own programs to the program list database **102** at regular intervals, and gets the information stored there. Furthermore, if the arrangement of its own programs were changed, then the broadcaster **100** would output information about the modified program arrangement to the program list database **102,** thereby updating the information stored on the program list database **102.** As used herein, the "program arrangement" refers to the broadcasting schedule of programs, i.e., information about what programs will be broadcast when.

The program list database **102** (which will be abbreviated herein as the "program list DB **102**") accumulates the program specific information about the specific parameters of the programs that has been transmitted from the broadcasters **100**. The program specific information is provided on respective programs that were, are, and will be, broadcast during a predetermined period of time. The "program specific information" is information to identify each of the programs arranged and includes a number of parameters. The following Table 1 shows examples of program specific information being managed on the program list database **102.** In Table 1, each row represents an item of the program specific information and each column represents one of the parameters that make up the program specific information:

**Table 1**

| Date of broadcast | Channel # | Start time | End Time | Title | Category |
|---|---|---|---|---|---|
| ... | ... | ... | ... | ... | ... |
| Feb-01-04 | 2 | 7:00 | 7:45 | Morning News | News |
| Feb-01-04 | 4 | 7:00 | 7:15 | Soap Opera X | Melodrama |
| ... | ... | ... | ... | ... | ... |
| Feb-10-04 | 6 | 19:00 | 21:24 | NPB game A against B | Sports |
| Feb-10-04 | 8 | 19:00 | 20:00 | Movie Theater Y | Movies |
| Feb-10-04 | 10 | 19:00 | ... | ... | ... |
| ... | ... | ... | ... | ... | ... |

As shown in Table 1, examples of the parameters include broadcaster information (e.g., the channel number) to identify the broadcaster of a program, broadcasting date/time information indicating the broadcasting date and time of the program, title information showing the title of the program, and additional information about the category of the program. Alternatively or additionally, the additional information may include the performers or summary of the program, the links with URL's for more detailed associated information, and other contents-related information of that program. The broadcaster or its affiliate company does maintenance (e.g., updating the data with the passage of time or upon the change of the program arrangement) on the program list DB **102.** Thus, the search engine **103** (to be described later) can always retrieve necessary information from the up-to-date program list DB **102.**

The search engine **103** receives a portion of the searching data, which has been entered by the user of the HDD recorder **200,** as a search key to search the program specific information. In response, by reference to the searching data received, the search engine **103** searches the program list DB **102,** thereby extracting at least one of the parameters that make up the program specific information of that program. In this case, the search engine **103** may extract either all of the parameters including the one corresponding to the searching data entered or a parameter different from the one corresponding to the searching data. For example, suppose the search engine **103** has received broadcaster information and broadcasting date/time information as the searching data. In that case, the search engine **103** finds an item of program specific information that meets these criteria and extracts the title information that makes up the program specific information.

In this description, the search engine **103** is supposed to search the program list DB **102.** Optionally, both the program list DB **102** and search engine **103** may be implemented as servers on the Internet so as to be accessed by any other server or client on the Net. In that case, the server of the program list DB **102** may receive the searching data from the search engine **103,** search its database and output the search results to the search engine **103.**

The router **104** connects an appliance to the network **101,** defines a route of transmitting packets to the appliance on the receiving end, and then transmits them to the recipient. The display device **105** presents video thereon and outputs sound through its attached loudspeakers.

The HDD recorder **200** records a program that has been transmitted by the broadcaster **100** on a hard disk and plays back the data of the recorded program. Optionally, the HDD recorder may have the function of writing data on any other storage medium (e.g., a DVD). In that case, the user can pick either the hard disk or the DVD as his or her desired storage.

The HDD recorder **200** includes a tuner **201,** an A/D converter **202,** an MPEG-2 encoder **203,** a hard disk drive (HDD) control section **204,** a hard disk drive (HDD) **205,** an MPEG-2 decoder **206,** a graphics control section **207,** a memory **208,** a D/A converter **209,** a CPU bus **213,** a network control section **214,** an operating switch **215** and a system control section **300.**

The tuner **201** tunes itself to, and receives, broadcast wave that has been transmitted from the broadcaster **100** and outputs the video and audio signals of the content to the A/D converter **202,** which converts the input signals into digital ones and supplies them to the MPEG-2 encoder **203.** In response, the MPEG-2 encoder **203** compresses and encodes the supplied digital data into the MPEG-2 format and passes it to the HDD control section **204.**

The HDD control section **204** is connected to the HDD **205** and controls reading and writing of data from/on the HDD **205.** More specifically, in recording a program, the HDD control section **204** sets the HDD **205** in a write enabled state and writes data on the HDD **205.** On the other hand, in playing back a recorded program, the HDD control section **204** sets the HDD **205** in a read enabled state and reads data from the HDD **205.** Then, the HDD control section **204** outputs the read data to the MPEG-2 decoder **206.**

The MPEG-2 decoder **206** expands the MPEG-2 compression-encoded data supplied, converts it into decompressed data and then passes it to the graphics control section **207.** The graphics control section **207** is connected to the internal computer memory **208** and realizes an on-screen display (OSD) function. For example, the graphics control section **207** combines any of various menu pictures with the video and outputs the resultant synthetic image to the D/A converter **209.** In response, the D/A converter **209** converts the input OSD synthetic image and audio data into analog data and outputs them.

The CPU bus **213** is a path for transferring signals in the HDD recorder **200.** The tuner **201,** A/D converter **202,** MPEG-2 encoder **203,** HDD control section **204,** MPEG-2 decoder **206,** graphics control section **207,** and D/A converter **209** are all connected to the CPU bus **213.** In addition, the respective components of the system control section **300** to be described below are also connected to the CPU bus **213.**

The network control section **214** has an interfacing function for connecting the HDD recorder **200** to the network **101** and exchanges data with another component (such as the search engine **103**) over the network **101.** The operating switch **215** is a switch that allows the user to select a channel on, or get a recording or playback operation done by, the HDD recorder **200.** The operating switch **215** further includes an input device such as a keyboard that allows the user to enter his or her searching data or a mouse that allows the user to select his or her desired searching data. The network control section **214** is connected to the CPU **211** (to be described later) of the system control section **300** by way of the CPU bus **213.** On the other hand, the operating switch **215** is directly connected to the CPU **211.** A signal generated by turning the operating switch **215** is supplied to the CPU **211.**

The system control section **300** controls the overall processing including the flow of signals in the HDD recorder **200,** and includes a program ROM **210,** the CPU **211** and a memory **212,** which are all connected to the CPU bus **213.** A software program for controlling the HDD recorder **200** is stored in the program ROM **210.**

The CPU **211** reads out and executes the program, thereby generating a control signal to carry out the processing as defined by the program. Then, the CPU **211** outputs the control signal to respective components by way of the CPU bus **213.** The memory **212** has a work area to store the data that is necessary for the CPU **211** to execute the program. For example, the CPU **211** may execute the software program stored in the program ROM **210** by using the CPU bus **213.**

Next, the functional configuration of the system control section **300** will be described.

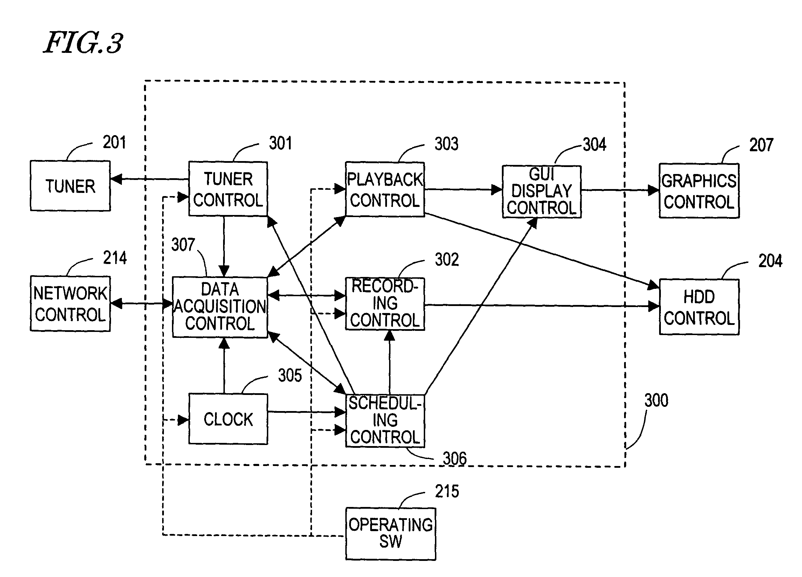

FIG. **3** shows an arrangement of functional blocks for the system control section **300.** In FIG. **3,** the tuner **201,** graphics control section **207** and other blocks are also shown for reference.

When the CPU **211** executes the computer program stored in the program ROM **210,** the respective functional blocks of the system control section **300** are realized as real functions of the CPU **211.** Alternatively, each of these functional blocks may also be implemented as a hardware circuit that operates under the control of the CPU **211.** In the following description, each of these functional blocks is supposed to be provided as a hardware component for convenience sake. For example, the tuner control block **301** shown in FIG. **3** will be referred to herein as a "tuner control section **301**". It should be noted that if these functions are implemented by means of software, they are realized by the internal processing of the CPU **211.**

The system control section **300** includes a tuner control section **301,** a recording control section **302,** a playback control section **303,** a GUI display control section **304,** a clock **305,** a scheduling control section **306,** and a data acquisition control section **307.**

The tuner control section **301** is connected to the tuner **201** by way of the CPU bus **213** so as to control the channel selection and reception done by the tuner **201.** Also, the tuner control section **301** provides information about the broadcaster currently selected for the data acquisition control section **307.** The recording control section **302** is connected to the HDD control section **204** by way of the CPU bus so as to issue an instruction to execute a write operation to the HDD control section **204.** The playback control section **303** is connected to the HDD control section **204** by way of the CPU bus so as to issue an instruction to execute a read operation to the HDD control section **204.** Furthermore, the playback control section **303** transmits the program title information of a content (i.e., a program) to be played back to the GUI display control section **304** and the broadcaster information and broadcasting date/time information of the content to the data acquisition control section **307,** respectively.

The GUI display control section **304** is connected to the graphics control section **207** by way of the CPU bus so as to instruct the graphics control section **207** to display a GUI window on the screen. More specifically, the GUI display control section **304** transmits the OSD picture data, which will eventually be displayed on the display device **105,** to the graphics control section **207.** The clock **305** provides current time data to the data acquisition control section **307** and scheduling control section **306.**

The scheduling control section **306** controls the listing of a program selected for recording and the execution of the scheduled recording operation. More specifically, while processing the listing of a program selected for recording, the scheduling control section **306** provides selected program list information, which will be displayed on a scheduling/listing window, for the GUI display control section **304** and the broadcaster information and broadcasting date/time information for the data acquisition control section **307,** respectively. Then, the scheduling control section **306** retains the parameters of the selected and listed program. On the other hand, in executing the scheduled recording operation (i.e., when it's the broadcasting date and time), the scheduling control section **306** sends out an instruction on a channel to be selected in executing the scheduled recording to the tuner control section **301** and an instruction to execute the scheduled recording to the recording control section **302,** respectively.

The data acquisition control section **307** is connected to the network control section **213** by way of the CPU bus **213** and sends out the title information of the selected and listed program to the scheduling control section **306.** In the data acquisition control section **307,** the address of a server, in which the search engine **103** has already been constructed, is stored. Thus, when the HDD recorder **200** is connected to the web (i.e., the Internet **101**), connection can be done by searching this server.

The operating switch **215** is a button or switch provided for the HDD recorder **200** and is connected to the tuner control section **301,** recording control section **302,** playback control section **303,** clock **305,** and scheduling control section **306.** On receiving the user's command, the operating switch **215** sends out an instruction on channel selection, recording, playback, clock setting or scheduling/listing to the respective blocks connected.

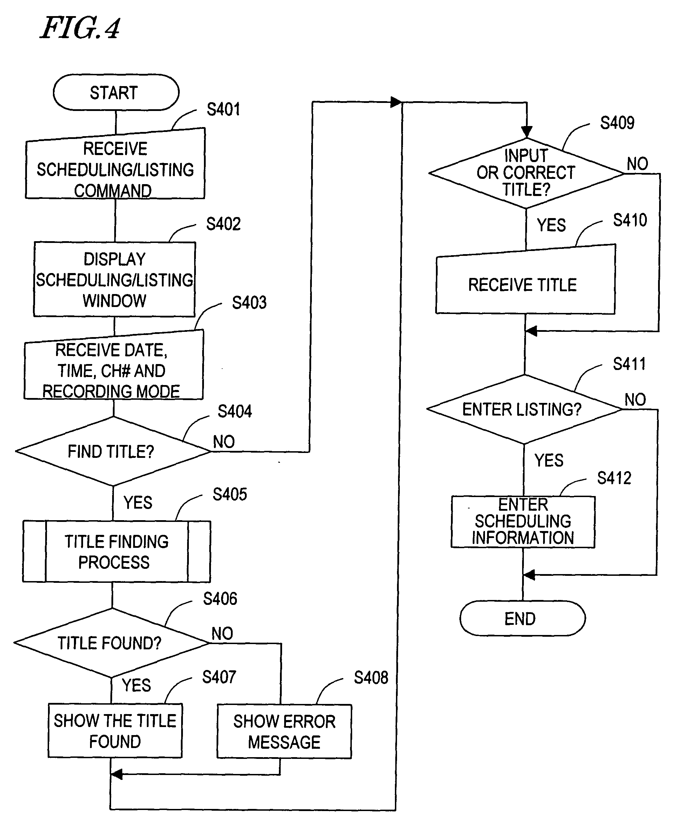

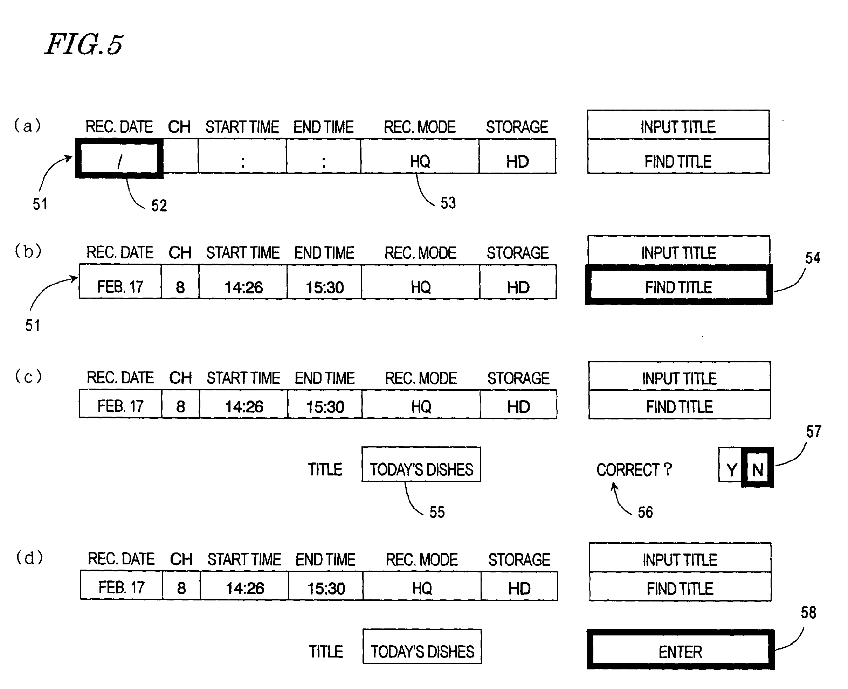

Hereinafter, processing to be done by this data processing system **90** will be described. In this embodiment, this processing is carried out to select a program for future recording by using the HDD recorder **200.** In the following description, not only FIG. **4** but also FIGS. **5(a)** through **5(d)** will be referred to when necessary.

FIG. **4** shows a procedure in which the HDD recorder **200** performs the process of selecting and listing a program to be recorded. First, in Step **S401,** the scheduling control section **306** receives user's command to start a scheduling/listing process of a program by way of the operating switch **215.** In response, the scheduling control section **306** controls the GUI display control section **304** and graphics control section **207,** thereby displaying a scheduling/listing window on the display device **105** in Step **S402.** FIG. **5(a)** shows an exemplary scheduling/listing window. In the scheduling/listing window, areas **51** to which the user needs to input various parameters to designate a program are displayed, and the area **52** currently waiting the user's input is highlighted. In this case, the various parameters include the "recording date", "channel number (CH)" of a program to be broadcast, "start time" and "end time" of the program, "recording mode" that will determine the quality of recorded video, and "type of storage medium" showing on what storage medium the program will have to be recorded. Among these parameters, the "recording date", "start time" and "end time" belong to broadcasting date/time information showing the recording date and time and the "channel number" of the program is broadcaster information identifying the broadcaster. In the two areas **53** showing the "recording mode" and "type of storage medium", "high quality" and "HD (hard disk)" are supposed to be selected as respective defaults.

Next, in Step **S403** shown in FIG. **4,** the scheduling control section **306** receives the user's specified broadcasting date and time, channel number and recording mode (if necessary) of a program to be recorded. FIG. **5(b)** shows exemplary input areas **51** to which various parameters have been input. In FIG. **5(b),** every parameter of the program to select and record has been entered. In this example, the recording date of "Feb. 17" includes only month and day but may further include year as well. The clock **305** can manage not only the recording date and time but also the year as well.

Next, in Step **S404,** the scheduling control section **306** waits either a command to find the title or a command to input the title. If the command to find the title has been entered, the process advances to Step **S405.** On the other hand, if the command to input the title has been entered, then the process jumps to Step **S409.** For example, if the "enter" button (not shown) of the operating switch **215** is pressed down while the "find title" area **54** is being highlighted as shown in FIG. **5(b),** then the find title command is issued. In the same way, if the "enter" button (not shown) of the operating switch **215** is pressed down while the "input title" area is being highlighted, then the input title command is issued.

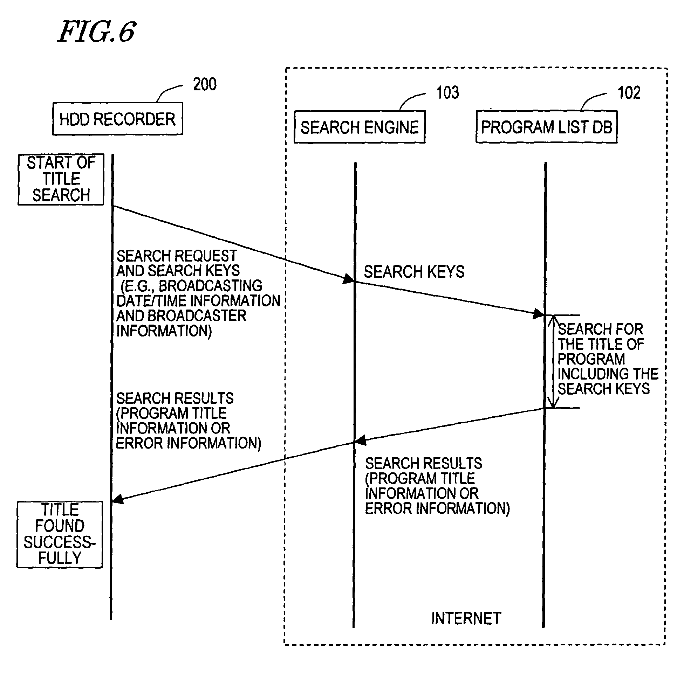

On receiving the find title command, the scheduling control section **306** performs the process of finding the title in Step **S405.** In the title finding process, the scheduling control section **306** transmits the input parameters (i.e., the broadcaster information and the broadcasting date/time information) as the searching data to the search engine **103** and obtains the search results, found by reference to the searching data, from the search engine **103.** The title finding process will be described in further detail later with reference to FIG. **6.**

Next, in Step **S406,** the scheduling control section **306** determines whether or not the control section **306** has received the title data of the program as a search result. If the control section **306** has received the title data of a program of which the parameters match the searching data, then the process advances to Step **S407.** On the other hand, if the control section **306** has received error data, then the process advances to Step **S408.** The error data is transmitted from the search engine **103** if there are no programs of which the parameters match the searching data transmitted.

In Step **S407,** in accordance with the instruction of the scheduling control section **306,** the title that has just been found is shown on the display device **105.** FIG. **5(c)** shows a title area **55** in which the title of the program is displayed. If the error data has been received, then the scheduling control section **306** shows a message such as "no titles found" on the display device **105** in Step **S408.** After that, the process advances to Step **S409.**

In Step **S409,** the scheduling control section **306** waits either a command to input a title or a command to correct the title. If the correct title command has been received, then the process advances to Step **S410.** Otherwise, the process jumps to Step **S411.** As shown in FIG. **5(c),** if the title has been found successfully, then an area **56** prompting the user to answer whether or not to correct the title is displayed. In this case, if the highlighted "N" area **57** is selected, then a command to make no corrections is entered. On the other hand, if the other "Y" area is selected, then a command to make a correction is entered.

In Step **S410,** the user inputs the title of the program with a software keyboard presented on the display device **105,** for example. When the scheduling control section **306** receives the title, the process advances to Step **S411.** In Step **S411,** the scheduling control section **306** waits a command on whether or not the scheduling and listing should be entered. If the answer is YES, the process advances to Step **S412.** Otherwise, the scheduling/listing process may end once and may be re-started from Step **S401** all over again. FIG. **5(d)** shows an area **58** in which "enter" is highlighted. If this area is selected, then the "enter" command is issued.

In Step **S412,** the scheduling control section **306** stores the selected parameters as scheduling information in an internal memory (not shown). In this example, the recording date, channel number, broadcasting start time, end time, recording mode, type of storage medium selected, and title of the program are stored. Then, the scheduling/listing process ends.

Next, the title finding process to be carried out as the Step **S405** mentioned above will be described with reference to FIG. **6,** which shows the flow of data in the title finding process. First, a search request and search keys (i.e., searching data) as its arguments are transmitted from the HDD recorder **200** to the search engine **103.** In this case, the search keys are the broadcasting date/time information and the broadcaster information. In the example illustrated in FIG. **5(b),** the broadcasting date/time information includes the recording date "Feb. 17", start time "14:26" and end time "15:30" and the broadcaster information is either the channel number "8" or the name of the broadcaster. On receiving the search request and the search keys, the search engine **103** searches the program specific information in the program list DB **102** with the search keys, determines whether or not there is an item of program specific information that matches the broadcasting date/time information and broadcaster information, and obtains the search results.

If the search engine **103** has found an item of program specific information including every key, then the search engine **103** acquires program title information representing the title of the program. Otherwise, the search engine **103** acquires error information. In any case, the search engine **103** sends the search results acquired to the HDD recorder **200** through the network **101.** When the HDD recorder **200** receives those search results, the title finding process ends. In the example illustrated in FIG. **5(c),** "today's dishes" has been acquired as the program title information.

By performing the process described above, the title of the program in question is found while the user is listing that program. When the broadcasting start time has come, the HDD control section **204** will record the program and its title on the hard disk drive with the program and its title associated with each other under the control of the recording control section **302.** As a result, the scheduled recording of the program is executed. The HDD recorder **200** can display a list of recorded programs. In the list, not only the recording date and time but also the title of the program may be displayed, or just the titles may be displayed. Then, the user can easily identify the recorded programs by their titles, not just by the recording dates and times and channel numbers.

In the example that has just been described with reference to FIGS. **5(a)** through **5(d),** the broadcasting date/time information as the search key is supposed to be made up of the broadcasting date, broadcasting start time and broadcasting end time. Alternatively, the broadcasting date/time information may also be made up of the broadcasting date and a particular time.

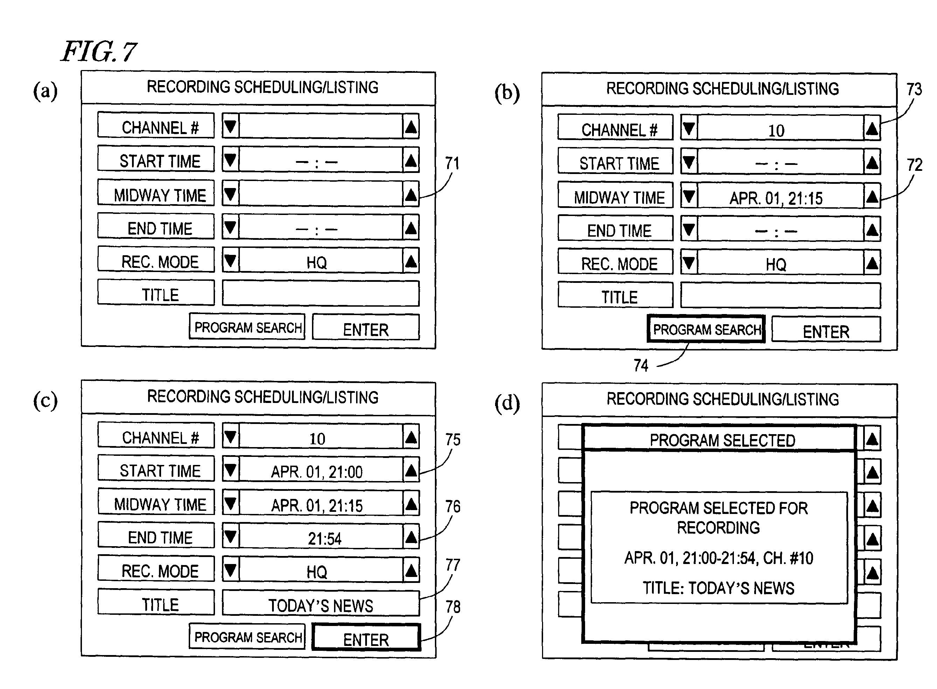

FIGS. **7(a)** through **7(d)** show a second exemplary scheduling/listing window according to this embodiment. This example relates to a scheduling/listing process for selecting a program to be recorded by searching for multiple programs that include a particular time (i.e., an time) during their broadcasting periods.

When a recording scheduling operation has been done with the operating switch **215,** the scheduling control section **306** instructs the GUI display control section **304** to open a recording scheduling window in response to an operation request. The GUI display control section **304** controls the OSD drawing operation of the graphics control section **207.** Then, the display device **105** displays a recording scheduling/listing window such as that shown in FIG. **7(a).** In the recording scheduling/listing window, an area **71** that makes the user specify a particular time (i.e., a midway time) as a piece of the broadcasting date/time information is displayed. Suppose the user has entered "Apr. 1, 21:15" in the area **72** and channel number "10" in the area **73,** respectively, as shown in FIG. **7(b).** In that case, when the "enter" button (not shown) of the operating switch **215** is pressed down while the "program search" area **74** is being highlighted, a title finding command is issued.

On receiving the title finding command, the scheduling control section **306** performs a title finding process. Specifically, the scheduling control section **306** transmits the entered broadcaster information and date/time information as the searching data to the search engine **103** by way of the data acquisition control section **307** and network control section **214.** In the example illustrated in FIG. **7(b),** the broadcaster information is "10" and the time information is "Apr. 1, 21:15".

The search engine **103** searches the program specific information by reference to the broadcasting date and broadcaster information first, thereby finding multiple sets of program specific information that meet each of these criteria. Next, the search engine **103** narrows the results so as to acquire program specific information of which the broadcasting start time is ahead of the midway time and the broadcasting end time is behind the midway time. As a result of the search, the search engine **103** acquires not only the title information of the program but also the broadcasting start and end times thereof as well, and transmits them to the HDD recorder **200.**

The scheduling control section **306** displays the received search results in the scheduling/listing window as shown in FIG. **7(c).** The start and end times discovered are shown in the areas **75** and **76,** respectively, and the title of the program is also shown in the area **77.** To select a program to be recorded just as proposed on the screen, the user may press down the "enter" button (not shown) of the operating switch **215** while the "enter" area **78** is being highlighted. Then, commands are issued so as to select and list a program for recording in accordance with the parameters specified. More specifically, the scheduling control section **306** selects a program to be recorded in accordance with the user's entered broadcaster information and the broadcasting start and end time information that has been acquired as search results. FIG. **7(d)** shows an exemplary window showing a message that the program to be recorded has been selected successfully. Thereafter, when the broadcasting start time of the selected and listed program has come, that program will start being recorded. When the end time is reached, the recording will be stopped.

In this second scheduling/listing procedure, a program to be recorded may be selected and listed according to the midway time. That is to say, as long as at least a rough broadcasting time range is known, the user can select and list a program to be recorded even if he or she does not know its detailed broadcasting start and end times. As a result, the degree of convenience increases for the user. Also, in displaying a list of selected programs, the titles of the programs can be displayed and the recorded programs can also be entitled, too. Consequently, the HDD recorder **200** allows the user to make a search much more easily.

It should be noted that if only a rough broadcasting time range is known but if the broadcaster's name is unknown, then program specific information may be acquired from a number of, or even all, broadcasters at a time so that the user may select a program. Also, multiple sets of program specific information about the programs to be broadcast during a predetermined period may be acquired at a time so that the user may pick one of those candidate programs.

In the embodiment described above, a selected program is supposed to be recorded from its broadcasting start time. Optionally, to record a selected program from its very beginning without missing any part of it, the "broadcasting start time" may be set somewhat earlier than the actual scheduled broadcasting start time (e.g., five minutes before the broadcasting start time) such that the program may start being recorded from the shifted broadcasting start time. However, if such a program is selected and listed for recording, then the shifted broadcasting start time will refer to the previous program, and therefore, the program title information of the previous program might be acquired by mistake. Accordingly, in fining the title of the program, the title of the program that will be broadcast some time later than the preset broadcasting start time should be found. In the example described above, the title of the program to be broadcast after at least five minutes have passed since the preset broadcasting start time may be found. Then, the program can be recorded with the program and its title matched correctly.

### EMBODIMENT 2

As a second embodiment, an appliance that can record a user's originally selected program even if the arrangement of programs is changed after the user has selected and listed the program for recording will be described.

The program recording processing of this embodiment is realized by a system that is approximately equivalent to the data processing system **90** as described for the first embodiment. Thus, this embodiment will also be described with reference to the data processing system **90** shown in FIG. **2.** The differences between the first and second embodiments will be described in detail, but otherwise the statement for the first embodiment will apply as it is.

First of all, in this embodiment, the program list DB **102** of the data processing system **90** further includes program IDs as another type of parameters. Unique program IDs are defined on a program-by-program basis so as to identify each program from the others. The following Table 2 shows exemplary program specific information to be managed on the program list database **102** of this embodiment. Unique program IDs are assigned to the respective programs. For example, each program ID of Table 2 may have a length of 10 bytes, in which the year (i.e., the last two digits of the calendar year), month, day, channel number of the broadcaster, and program identification code defined by the broadcaster may be assigned on a 2-byte basis in this order (i.e., starting from the most significant two bytes). In this manner, each program may be assigned a unique ID. It should be noted that this program ID composition is just an example. Thus, the program ID may be defined according to any other standard.

**Table 2**

| Date of broadcast | Ch. | Start time | End Time | Title | Category | Program ID |
|---|---|---|---|---|---|---|
| ... | ... | ... | ... | ... | ... | ... |
| Feb-01-04 | #2 | 7:00 | 7:45 | Morning News | News | 0402010205 |
| Feb-01-04 | #4 | 7:00 | 7:15 | Soap Opera X | Melodrama | 0402010408 |
| ... | ... | ... | ... | ... | ... | ... |

The HDD recorder **200** of this embodiment can allow the user to select a program for future recording and then see, by using the program ID thereof, if there is any change in the arrangement of programs before the selected program is actually broadcast. As used herein, the "change in the arrangement of programs" may refer to the delayed start of broadcasting of a program in question, for example. If the HDD recorder **200** has detected no change in the arrangement of programs, then the recorder **200** will start recording the selected program at the originally scheduled broadcasting start time of that program. On the other hand, if the HDD recorder **200** has sensed any change in the arrangement of programs, then the recorder **200** modifies the broadcasting start time and other parameters of the selected and listed program such that the program will start being recorded at that modified time. After that, while keeping on checking whether or not there is any change in the arrangement of programs, the HDD recorder **200** will start recording the program at the modified time if no changes have been sensed in the arrangement of programs.

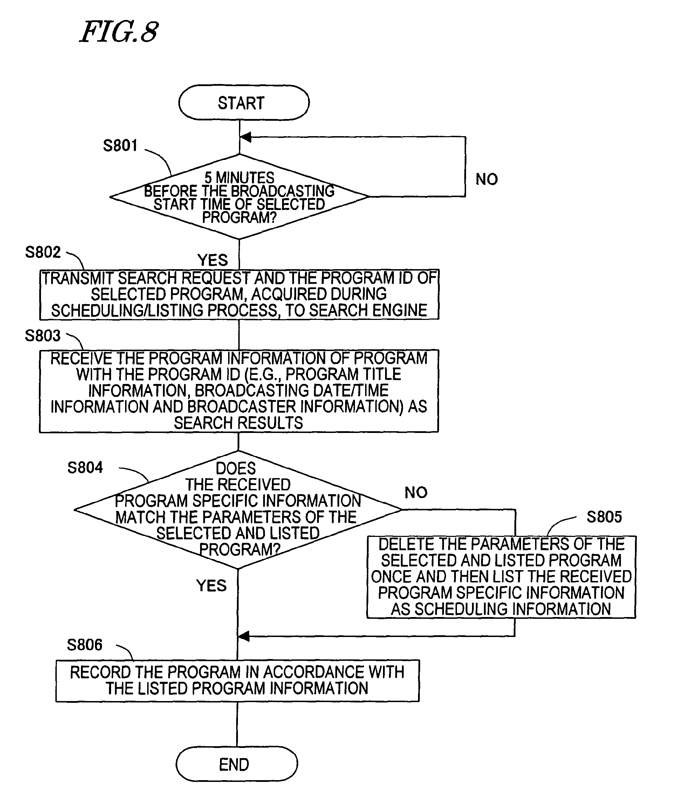

Hereinafter, this processing will be described in detail with reference to FIGS. **3** and **8.** First, suppose a program has already been selected and listed for recording before this processing starts. The parameters of the program listed include not only the broadcaster information (i.e., the channel number), broadcasting date, broadcasting start time and title of the program but also the program ID of that program, too, according to this embodiment.

FIG. **8** shows the procedure of a scheduling/listing process to be performed by the HDD recorder **200.** First, in Step **S801,** the scheduling control section **306** determines, by reference to the current time shown on the clock **305,** whether or not it is already five minutes before the broadcasting start time of the selected program. If the answer is NO, then the scheduling control section **306** will wait until then. On the other hand, if the answer is YES, then the scheduling control section **306** will carry out the processing step **S802** and following processing steps. In Step **S802,** the scheduling control section **306** transmits not only a search request but also the program ID of the selected program, which was acquired during the scheduling/listing process, as a part of the searching data to the search engine **103.**

In response, the search engine **103** searches the program list DB **102,** thereby acquiring the program specific information of the program to which that program ID is assigned. In this case, the program specific information acquired may be parameters on the program title information, broadcasting date, broadcasting start time, broadcasting end time and broadcaster information. The search engine **103** transmits the acquired parameters to the HDD recorder **200.**

Next, in Step **S803,** the scheduling control section **306** of the HDD recorder **200** receives the search results from the search engine **103** by way of the network control section **214** and the data acquisition control section **307.** Then, in Step **S804,** the scheduling control section **306** determines whether not the program specific information received matches the parameters of the selected and listed program. If the answer is NO, the process advances to Step **S805.** On the other hand, if the answer is YES, the process advances to Step **S806.**

Suppose the start of broadcasting of the selected and listed program has been delayed due to the extension of one of its previous programs, for example. In that case, the broadcaster **100** notifies the program list DB **102** of the change in the arrangement of programs. Then, in the program specific information of that program, the program ID and broadcaster information remain unchanged but its broadcasting start and end times are modified into updated ones. Accordingly, the program specific information received from the search engine **103** will be different from the parameters of the selected and listed program.

On the other hand, if the broadcaster 100 notifies the program list DB **102** of no change in the arrangement of programs, then the original parameters of the selected and listed programs will be kept as they are in the program list DB **102.** Accordingly, the program specific information received from the search engine **103** will match the parameters of the selected and listed program.

In Step **S805,** the scheduling control section **306** deletes the parameters of the selected and listed program once and makes a modified scheduling and listing in accordance with the updated program specific information received. As a result, the user's selected program to be recorded is listed again in accordance with the newest program arrangement at that point in time. Thereafter, the process advances to Step **S806.**

In Step **S806,** by reference to the parameters of the selected and listed program, the scheduling control section **306** judges that the scheduled start time has come and starts recording the program exactly at the start time.

By performing the processing described above, even if the program arrangement has been changed after a program was selected and listed, the broadcasting start time can be modified according to the change and the scheduled recording of the program can be executed without fail. In addition, by judging whether or not the program title, as well as the program ID, matches, the scheduled recording can be executed and the recorded program can be entitled with more reliability. It should be noted that if the broadcasting of that program has been canceled, then there will be no program specific information about the program with that program ID on the program list DB **102.** In that case, the search engine **103** may output error information to the HDD recorder **200.**

Furthermore, if the same processing as that shown in FIG. **8** is carried out while the program is still being recorded and five minutes before its scheduled end time, for example, then any change in program arrangement can be coped with even more appropriately. More specifically, if there is a change in program arrangement while the program is being broadcast and if the broadcasting of that program is extended, then the HDD recorder **200** gets a parameter on the broadcasting end time of the program being recorded by reference to the program ID before the broadcasting of that program ends. If this parameter matches the counterpart of the selected and listed program, then the recording of the program may be ended in accordance with the parameters entered. Otherwise, the parameters entered are updated according to the newly acquired parameter and the recording may be re-started in accordance with the parameters. Then, the program can be recorded to its very end and its recording will never end before the program itself ends.

The first embodiment was described as being applied to selecting a program to be recorded. However, those statements apply to not only the situation where a selected program is recorded as scheduled but also a situation where the user has recorded, or is recording, a program by directly pressing down the recording start button that allows the user to instruct to start recording the program. For example, as to the process of finding the program title according to the first embodiment, the search engine **103** may search the program list DB **102** by reference to the broadcasting date, broadcasting start and end times and channel information so as to find the titles of the past programs. Alternatively, the title of the matching program in the past may also be found by using the program ID of the second embodiment.

In the first and second embodiments described above, connection to the network **101** such as the Internet is supposed to be done directly by way of only the router. Alternatively, the connection may also be established either by way of ADSL, ISDN or an analog modem or wirelessly with a wireless LAN or a cell phone, for example.

As described above, according to the present invention, the recorder can acquire additional information of a program, including its title, based on the times and broadcaster name by using a simple configuration, or without storing program list data in itself. Thus, the following effects are achieved.

Specifically, according to the present invention, even without providing the EPG capability for the recorder itself (i.e., with a simplified configuration), the user can confirm the title of a program being selected and listed and yet to be recorded, for example, just by entering the information specifying the times and broadcaster. Also, even if the exact start and end times of the program are unknown, detailed additional information may also be available just by entering a specific time during the broadcasting of that program.

In addition, according to the present invention, a program being recorded or a program that was recorded in the past may be entitled automatically. As a result, any recorded content can be searched for easily.

Furthermore, according to the present invention, the program information database is not allowed to accumulate data there endlessly but is updated occasionally at the time of operation or control. Accordingly, if there is any change in the database on the transmitting end, update can be made swiftly enough to catch up with the change. As a result, even if the program arrangement has been changed, the operation of finding the title of the program can also be carried out almost in real time and the scheduled recording can be controlled highly accurately.

The functions of the data processor that has been described as the HDD recorder may be implemented by a computer program that defines the processing procedure shown in FIG. **4** or **8.** By executing such a computer program, the computer in the data processor can operate the respective components of the data processor and realize the processing described above. The computer program may be either circulated on the market after having been stored on a CD-ROM or any other appropriate storage medium or downloaded via telecommunications lines such as the Internet. Then, the computer system may operate as a player having the same function as the data processor described above.

### INDUSTRIAL APPLICABILITY

The present invention provides an apparatus that can acquire and use some information on a program (such as the title and broadcasting date and time thereof) in real time without compiling an electronic program guide. The present invention also provides an apparatus that contributes to increasing the users' convenience by recording the program by taking advantage of such information.

## Claims

1. A data processor connected to a network, to which a database and a server are also connected,
the database being provided to store program specific information, which is made up of a number of parameters to designate a particular program,
the server being provided to search the program specific information in the database by reference to searching data, thereby extracting at least one of the parameters,
the data processor comprising:
a user interfacing section for receiving searching data on a program to be recorded from the user;
a control section for transmitting the searching data to the server and receiving a parameter that has been extracted by the server; and
a recording section for recording the received parameter and the program to be recorded on a storage medium so that the parameter and the program are associated with each other.

2. The data processor of claim 1, wherein the database stores, as the parameters, title information representing the title of a program, broadcaster information identifying the broadcaster of the program, and date/time information showing date and time, and
wherein the user interfacing section gets, as the searching data, information on the broadcaster and scheduled broadcasting date and time of the program to be recorded, and
wherein the control section receives the title information that has been extracted by the server by reference to the searching data.

3. The data processor of claim 2, wherein the user interfacing section gets date/time information specifying a predetermined period, and
wherein the control section receives the title information of programs to be broadcast during the predetermined period from the broadcaster identified by the broadcaster information.

4. The data processor of claim 3, wherein the recording section records the title information of the programs and the programs themselves during the predetermined period so that the programs and the title information are associated with each other.

5. The data processor of claim 2, wherein the user interfacing section gets date/time information represented by a specified time, and
wherein the control section receives the title information of a program to be broadcast during a broadcasting period, including the specified time, by the broadcaster identified by the broadcaster information.

6. The data processor of claim 5, wherein the control section further receives parameters specifying start and end times of the broadcasting period of the program from the server, and
wherein the recording section records the title information of the program and the program itself during the broadcasting period, specified by the parameters, so that the program and the title information are associated with each other.

7. The data processor of claim 3, wherein the database further stores an identifier, which identifies each said program from the other programs, as another parameter making up the program specific information, and
wherein the control section receives not only the title information of the program but also the identifier thereof, transmits the identifier to the server before the predetermined period begins so as to receive the date/time information of the program, having the identifier, from the server, and determines whether or not the received date/time information shows the same period of time as the predetermined period, and
wherein if the date/time information shows the same period of time as the predetermined period, then the recording section records the title information of the program and the program itself during the predetermined period.

8. The data processor of claim 3, wherein the database further stores an identifier, which identifies each said program from the other programs, as another parameter making up the program specific information, and
wherein the control section receives not only the title information of the program but also the identifier thereof, transmits the identifier to the server before the predetermined period begins so as to receive the date/time information of the program, having the identifier, from the server, and determines whether or not the received date/time information shows the same period of time as the predetermined period, and
wherein unless the date/time information shows the same period of time as the predetermined period, the predetermined period is changed in accordance with updated date/time information that has been obtained after the identifier was transmitted.

9. The data processor of claim 2, wherein the database further stores additional information on at least one of the contents, performers and category of the program as another parameter, and
wherein the control section receives the additional information that has been further extracted by the server by reference to the searching data.

10. A data processing method for use in a data processor connected to a network, to which a database and at least one server are also connected,
the database being provided to store program specific information, which is made up of a number of parameters to designate a particular program,
the at least one server being provided to search the program specific information in the database by reference to searching data, thereby extracting at least one of the parameters,
the method comprising the steps of:
receiving searching data on a program to be recorded from the user;
transmitting the searching data to the server and receiving a parameter that has been extracted by the server; and
recording the received parameter and the program to be recorded on a storage medium so that the parameter and the program are associated with each other.

11. The data processing method of claim 10, wherein the database stores, as the parameters, title information representing the title of a program, broadcaster information identifying the broadcaster of the program, and date/time information showing date and time, and
wherein the step of receiving the searching data includes getting, as the searching data, information on the broadcaster and scheduled broadcasting date and time of the program to be recorded, and
wherein the step of receiving the parameter includes receiving the title information that has been extracted by the server by reference to the searching data.

12. The data processing method of claim 11, wherein the step of receiving the searching data includes getting date/time information specifying a predetermined period, and
wherein the step of receiving the parameter includes receiving the title information of programs to be broadcast during the predetermined period from the broadcaster identified by the broadcaster information.

13. The data processing method of claim 12, wherein the step of recording includes recording the title information of the programs and the programs themselves during the predetermined period so that the programs and the title information are associated with each other.

14. The data processing method of claim 11, wherein the step of receiving the searching data includes getting date/time information represented by a specified time, and
wherein the step of receiving the parameter includes receiving the title information of a program to be broadcast during a broadcasting period, including the specified time, by the broadcaster identified by the broadcaster information.

15. The data processing method of claim 14, wherein the step of receiving the parameter further includes receiving parameters specifying start and end times of the broadcasting period of the program from the server, and
wherein the step of recording includes recording the title information of the program and the program itself during the broadcasting period, specified by the parameters, so that the program and the title information are associated with each other.

16. The data processing method of claim 12, wherein the database further stores an identifier, which identifies each said program from the other programs, as another parameter making up the program specific information, and
wherein the step of receiving the parameter includes the steps of:
receiving not only the title information of the program but also the identifier thereof;
transmitting the identifier to the server before the predetermined period begins so as to receive the date/time information of the program, having the identifier, from the server; and
determining whether or not the received date/time information shows the same period of time as the predetermined period, and
wherein if the date/time information shows the same period of time as the predetermined period, then the step of recording includes recording the title information of the program and the program itself during the predetermined period.

17. The data processing method of claim 12, wherein the database further stores an identifier, which identifies each said program from the other programs, as another parameter making up the program specific information, and
wherein the step of receiving the parameter includes the steps of:
receiving not only the title information of the program but also the identifier thereof;
transmitting the identifier to the server before the predetermined period begins so as to receive the date/time information of the program, having the identifier, from the server; and
determining whether or not the received date/time information shows the same period of time as the predetermined period, and
wherein unless the date/time information shows the same period of time as the predetermined period, the step of receiving the parameter further includes the step of changing the predetermined period in accordance with updated date/time information that has been obtained after the identifier was transmitted.

18. The data processing method of claim 11, wherein the database further stores additional information on at least one of the contents, performers and category of the program as another parameter, and
wherein the step of receiving the parameter includes receiving the additional information that has been further extracted by the server by reference to the searching data.
